# EUROPEAN PATENT SPECIFICATION

(11) **EP 3 654 752 B1**
(45) Date of publication and mention of the grant of the patent: **08.11.2023**
(21) Application number: 18749070.1
(22) Date of filing: 19.07.2018
(51) Int. Cl.: A01D 46/00

(54) **DEVICE FOR HANDLING OBJECTS**
VORRICHTUNG ZUM HANDHABEN VON GEGENSTÄNDEN
DISPOSITIF POUR LA MANIPULATION D'OBJETS

(30) Priority: 21.07.2017 GB 201711768
(43) Date of publication of application: 27.05.2020
(73) Proprietor: Xihelm Limited, Poole BH16 6FA (GB)
(72) Inventor: KENT, James, Lytchett Matravers Poole GBH16 6FA (GB); THOREY, Clement, Lytchett Matravers Poole BH16 6FA (GB)
(74) Representative: Kramer, Dani
(86) International application number: PCT/GB2018/052038
(87) International publication number: WO 2019/016551

(56) References cited:
- WO-A1-2016/090012
- CN-A- 105 993 383
- CN-B- 103 782 725

## Description

The present invention relates to a device for handling objects. In particular, the invention relates to a device for handling fruit or vegetable products. More specifically, the invention relates to an end-effector device for a robot (arm).

Seasonal labour availability is a concern in the produce growing industry, which can increase production costs and lower the competitiveness of fruit and vegetable growers. To address this concern, various apparatus and devices have been devised to perform tasks across agriculture, including the automation of picking fruit and vegetables. However, a large number of fruit and vegetables still have to be picked by human hand, such as premium on-the-vine varieties of tomatoes, because existing devices (for example, robot end-effectors) either cannot handle the variety of fruit or cause damage to the fruit or the plant.

An improved device for handling such products, preferably for detaching those products from the plant or vine from which they have grown, with minimal damage to the plant and/or product, is therefore desired.

CN105993383A relates to a stemless picking paw.

WO2016090012A1 relates to an end effector for robotic harvesting.

CN103782725A relates to a picking paw.

Aspects and embodiments of the present invention are set out in the appended claims. These and other aspects and embodiments of the invention are also described herein.

Described herein is a device for handling fresh fruit or vegetable products attached to a plant, comprising: means for retaining at least a first portion of a product; and means for engaging a peduncle of the retained product; wherein the engaging means is arranged to rotate the peduncle of the retained product ; wherein the retaining means and engaging means are arranged such that, while a product is retained by the retaining means, the engaging means can be moved to detach the product.

Optionally, the engaging means is arranged to rotate the second portion of the retained product. Optionally, the retaining means and the engaging means are arranged to rotate together. Optionally, the retaining means is operable to rotate the first portion thereby causing the second portion to be rotated when engaged by the engaging means.

Optionally, the device further comprises means for rotating the retaining means, for example by applying a rotational force to the retaining means. Optionally, the rotating means comprises a motor arranged to provide a rotational drive output and a drive member arranged to be driven by the motor, preferably wherein the rotating means is arranged to provide continuous rotation of the retaining means. Optionally, the drive member is arranged to engage an exterior portion of the retaining means so as to provide direct rotational drive to the retaining means, for example wherein said drive member is a belt, strap or chain. Optionally, the rotating means comprises a gear and rack arrangement. Optionally, the retaining means is spring-loaded such that, following rotation of the retaining means from a first position to a second position, the retaining means is biased to return to the first position once the rotational force has been removed.

Optionally, the engaging means is arranged to inhibit movement of the second portion relative to the retained first portion when engaged therewith, for example wherein the engaging means is operable to clamp the second portion.

Also described herein is a device for handling fresh fruit or vegetable products attached to a plant, comprising: means for retaining at least a first portion of a product; and means for engaging a second portion of the retained product; wherein the engaging means is arranged to inhibit movement of the second portion relative to the retained first portion when engaged therewith.

Optionally, the engaging means comprises an annular member arranged to provide an aperture through which at least part of the second portion can be received. Optionally, the annular member is configured to have a variable diameter such that the aperture can be opened or closed about the second portion. Optionally, the annular member further comprises a plurality of cooperating portions arranged to move relative to each other during rotation of the retaining means so as to vary the diameter of the aperture. Optionally, the plurality of portions are operable to close the aperture around the second portion such that the annular member engages the second portion. Optionally, the engaging means is arranged to move the second portion to a position that is generally central of the aperture.

Optionally, the engaging means is operable to sever the second portion. Optionally, the device further comprises cutting means operable to sever the second portion. Optionally, the cutting means comprises pneumatic or electric shears.

Optionally, the further comprises means for securing said at least a portion of said retained product; wherein the securing means is arranged to secure at least said first portion in a desired position and/or orientation relative to the retaining means.

Also described herein is a device for handling fresh fruit or vegetable products, comprising: means for retaining at least a first potion of a product; and means for securing said at least a first portion of said retained product; wherein the securing means is arranged to secure at least said first portion in a desired position and/or orientation relative to the retaining means.

Optionally, the retaining means has an interior compartment arranged to receive at least the first portion of the product via an opening, and wherein the securing means is disposed within the retaining means. Optionally, the retaining means comprises a receptacle having an interior compartment arranged to receive the first portion via an opening in the receptacle. Optionally, the receptacle comprises a housing having an opening through which the first portion is received into the interior compartment of the housing, for example wherein the housing is cylindrical and/or in the form of a canister. Optionally, the retaining means comprises a mesh or frame structure, for example wherein the exterior of the retaining means does not provide a continuous solid surface.

Optionally, the engaging means is positioned at the opening of the retaining means. Optionally, the engaging means is part of the retaining means, for example wherein the engaging means is an integral part of the retaining means. Optionally, the securing means comprises one or more members that can be pulled tight about the product to secure it and loosened to release the product, preferably wherein the one or more members are flexible members.

Alternatively, or additionally, the securing means may comprise an inflatable member, wherein the inflatable member is arranged to inhibit movement of the first portion when inflated. Optionally, the inflatable bladder is arranged at least partially to surround at least the first portion of the product when inflated. Optionally, the bladder has a substantially U-shaped configuration when uninflated and a substantially C-shaped configuration when inflated. Optionally, the device further comprises means for connecting to an air supply for inflation of the inflatable bladder, wherein the connecting means is arranged to provide a connection with the air supply that allows the retaining means to be rotated relative to the air supply while maintaining an air seal, for example wherein the air supply comprises a hose or a similar air conduit.

Optionally, a sensor is arranged to detect the presence of a product within the retaining means and/or entering the retaining means. Optionally, a sensor is arranged to detect the orientation of a product retained by the retaining means. Optionally, the sensor(s) include a camera, for example an RGB camera.

Optionally, the device further comprises means for creating a partial vacuum for sucking a product thereby to position it relative to the retaining and/or engaging means. Optionally, the sucking means is arranged to suck the product into the retaining means.

Optionally, the retaining means is mounted to a support arranged to be connected to a mechanical device, optionally wherein the support has either a single or multiple-point attachment formation for attachment to the mechanical device.

Optionally, the retaining means is mounted to a support such that it can rotate relative to the support, preferably wherein the retaining means is rotatably mounted on one or more support components that are arranged to allow the retaining means to rotate relative to the support with minimal friction. Optionally, the support further comprises a quick-release mechanism configured to allow the device to be attached to and detached from a mechanical device, for example such that the device can be readily interchanged with a different device having a corresponding quick-release mechanism.

Optionally, the device is an end effector for a mechanical device, for example a robot arm.

According to another aspect, there is provided a robot arm comprising a device as described and/or claimed herein. Optionally, the robot arm is arranged to connect to two or more such devices.

According to another aspect, there is provided a support frame for mounting a plurality of devices as described and/or claimed herein. Optionally, each device is independently mounted, via springs, to the support frame to allow each device to move relative to the other device(s).

According to another aspect, there is provided a robot comprising a device and/or a robot arm as described and/or claimed herein.

According to another aspect, there is provided a device and/or method of operation as substantially described herein and/or illustrated in the accompanying drawings.

The fruit or vegetable product may be a tomato or a bell pepper, for example. The first portion may be a 'preferred' or 'edible' portion (such as the body of the product) and the second portion may be a 'non-preferred' or 'non-edible' portion (such as the stalk), for example. The device may act to break, tear or otherwise separate the second portion from (e.g. a stalk of) the plant to which the product is attached, thereby to detach the product, for example. Alternatively, or additionally, the first and second portions may be different portions of a stalk (or similar part) via which a product is attached to the plant.

In embodiments where the product is a tomato, the first portion may be the tomato body (or "fruit") and the second portion may be the stalk that connects the tomato to its plant (e.g. the "peduncle"). In embodiments where the product is a bell pepper, the first portion may be the pepper body and the second portion may be (at least part of) the stalk that connects the bell pepper to its plant. The invention is of course not limited to handling these types of fruit and vegetable, which are simply illustrative examples of preferred products. Furthermore, the device is not limited to handling a fruit or vegetable product, but may be arranged to handle other (e.g. non-organic) articles or objects, preferably which have first and second portions.

As used herein, the term "end effector" preferably connotes a (e.g. mechanical) device or tool that is typically provided to at the end of a robot arm, such as grippers, vacuum suckers, and cutters for example. The end effector is usually the main part of a robot that interacts with the environment. As used herein, the term "handling" preferably includes harvesting, picking, holding, moving, collecting, and any other action that may be performed by a human hand in relation to a fruit or vegetable product.

As used herein, the term "retaining" preferably connotes keeping and/or holding, for example. As used herein, the term "receptacle" preferably connotes a form of container used to retain something, such as a fruit or vegetable. Such a receptacle is, preferably, hollow, and may further be described as a drum, can or canister, for example. As used herein, the term "iris mechanism" preferably connotes an arrangement of moveable portions forming an aperture which can open or close in a manner similar to an iris of an iris diaphragm, similar to a lens of a camera, for example.

Any apparatus feature as described herein may be provided as a method feature, and vice versa. Furthermore, as used herein, means plus function features may be expressed alternatively in terms of their corresponding structure. For example, the securing means may comprise an inflatable member, such as an inflatable bladder, as described above.

The invention extends to an apparatus and/or method for handling a fruit or vegetable product substantially as described herein and/or as illustrated in the accompanying figures.

At least one exemplary embodiment of the present invention will now be described with reference to the accompanying figures, in which:
Figure 1 shows an example of a device according to the invention;
Figures 2A and 2B show how an inflatable member can retain a first portion of a product;
Figures 3A and 3B show a second portion of the product being engaged by the device;
Figure 4 shows an exemplary method of handling a product using the device; and
Figure 5 shows multiple devices mounted on a support frame.

In the following description and accompanying drawings, corresponding features of different embodiments are, preferably, identified using corresponding reference numerals.

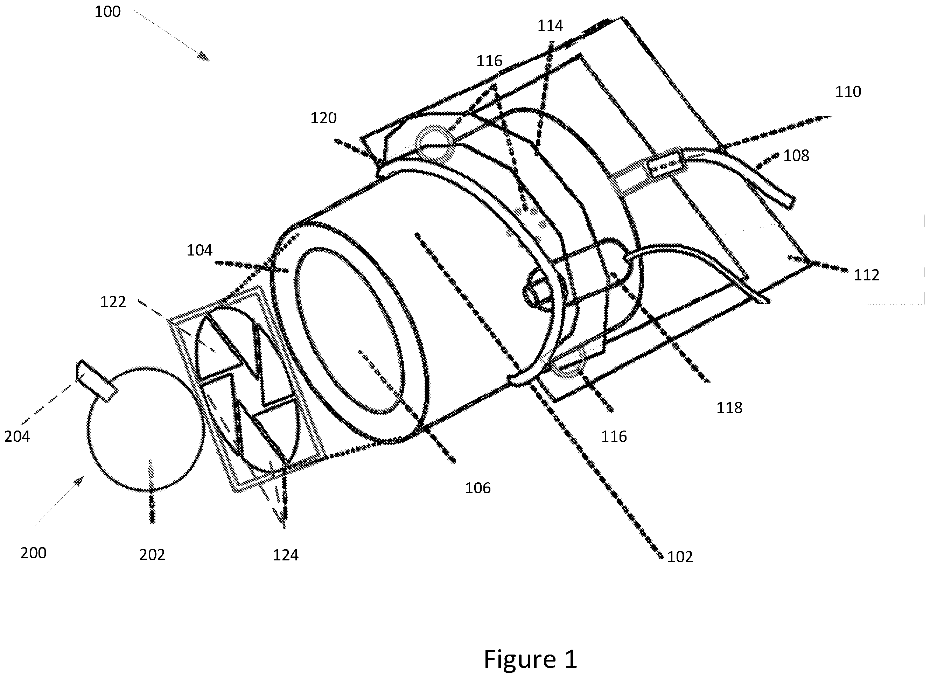

As shown in Figure 1, an end effector device 100 according to the present invention includes a receptacle 102 in the form of a cylindrical housing. The receptacle 102 (i.e. a "retaining means") has a first open end 104 forming an aperture (or "opening") 106, for receiving a fruit or vegetable product 20 into the receptacle 102, and a second end.

A tomato 200 (e.g. a fruit "product") having a body 202 (e.g. "first portion") and a peduncle 204 (e.g. "second portion") is shown about to be received into the receptacle 102 via the aperture 106. For simplicity, the device 100 will be described hereinafter with reference to a tomato 200, though it will of course be appreciated that a tomato is only one example of a "product" (or indeed an "object") that the device 100 can handle.

An iris mechanism 122 (i.e. an "engaging means") is provided at the open end 104 of the receptacle 102. Once the body 202 of the tomato 200 is retained within the receptacle 102, the iris mechanism 122 is operable to engage the peduncle 204 of the tomato 200 that extends through the aperture 106. Preferably, the iris mechanism 122 closes in such a way to orientate the peduncle 204 generally centrally of the iris mechanism 122, and thus orientate also the body 202. Thus, when the iris mechanism 122 is closed to engage the peduncle 204, the peduncle 204 is ideally moved to be orthogonal to the body 202 of the tomato 200 retained within the receptacle 102.

The iris mechanism 122 comprises an annular (ring) member that surrounds a plurality of moveable portions (e.g. "blades" or "petals") 124-1, 124-2...124-n arranged to close (or cover) the aperture 106, thereby to engage the peduncle 204 of the tomato 200. The plurality of moveable portions 124 are configured to form an iris diaphragm, similar to that often used in a camera lens, which may be opened and closed. The iris diaphragm may contain between 2 and 20 moveable portions 124. In one embodiment, two (opposing) moveable portions 124 may be arranged at right-angles to create a square aperture that moves the peduncle 204 to the centre of the aperture 106 when the iris mechanism 122 is closed.

The surface material of the iris mechanism 122 and/or the moveable portions 124 may be configured to provide a friction engagement with the peduncle 204 of the tomato 200 thereby to avoid excess damage. The iris mechanism 122 may also include one or more sensors (not shown) arranged to detect if the tomato 200 is sufficiently centred within the aperture 106. The sensors might be placed in the moveable portions 124, the annular (ring) member of the iris mechanism 122 or external of the receptacle 102 (e.g. camera checking position).

The iris mechanism 122 is caused to open and close by rotation of the receptacle 102. The receptacle 102 can therefore be rotated in either direction.

An air supply (hose) 108 may be attached to the receptacle 102, preferably at the closed end, via a coupling 110, which will be described in more detail below. The coupling 110 that fluidly connects the air hose 108 to the inflatable bladder 126 inside the receptacle 102 comprises a first part 110-1 and a second part 110-2, which are connected together so as to allow continuous rotation of the first part 110-1 relative to the second part 110-2 without disrupting air flow though the hose 108. For example, the first and second parts 110-1, 110-2 of the coupling 110 may comprise a rotary union and/or a rotary joint to inhibit twisting of the air supply hose 108 from restricting movement of the end effector 100 (or damage it). As an alternative, the air supply may be local, powered using a cylinder or local air pump, rather than a remotely connected air supply.

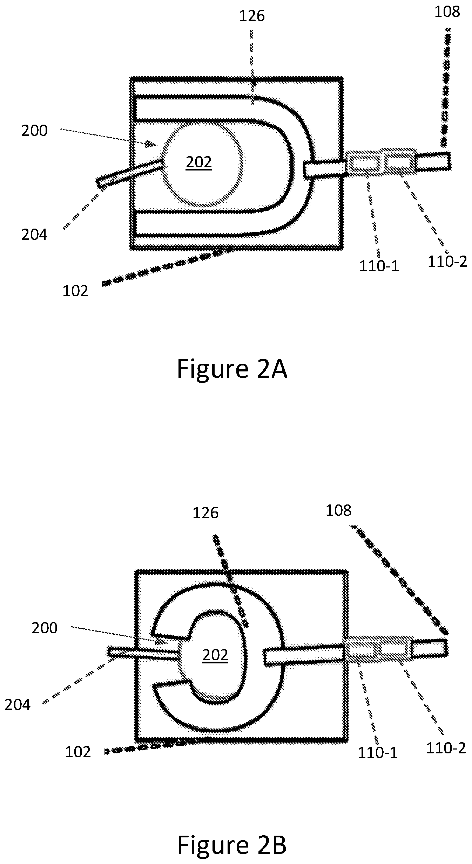

Figures 2A and 2B are schematic sectional views showing an interior compartment of the receptacle 102. An inflatable bladder 126 (i.e. an "inflatable member") is disposed within the receptacle 102. The inflatable bladder 126 is connected to the air supply hose 108. The inflatable bladder 126 is configured such that, when deflated, the tomato 200 can be received into, and removed from, the receptacle 102, as shown in Figure 2A. When the inflatable bladder 126 is inflated, via the air supply 108, it forms a general 'C shape' that substantially encompasses the first portion 202 of the tomato 200, thereby securing it within the receptacle 102, as shown in Figure 2B. Thus, when inflated, the inflatable bladder 126 inhibits movement of the body 202 of the tomato 200 within the receptacle 102, for example to inhibit rotation of the tomato 200 and/or slippage of the tomato 200 relative to the inflatable bladder 126.

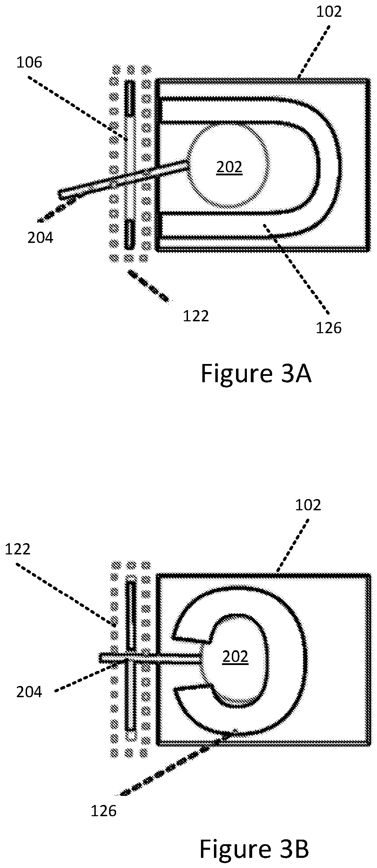

As shown in schematic Figures 3A and 3B, when a tomato 200 is disposed within the receptacle 102, its peduncle 204 extends though the aperture 106 of the receptacle 102 and thus through the iris mechanism 122. Prior to inflation of the inflatable bladder 126, the peduncle 204 is free to rest though or on the iris mechanism 122, as shown in Figure 3A. As the iris mechanism 122 closes, it engages the peduncle 204 by gripping it between the moveable portions 124-1, 124-2, etc., as shown in Figure 3B. At the same time, the peduncle 204 is moved to a position that is generally central of the aperture 106, which may cause the body 202 of the tomato 200 to be moved (or orientated) within the receptacle 102 accordingly. The inflatable bladder 126 is then inflated, preferably once the iris mechanism 122 has closed, to secure the body 202 of the tomato 200 within the receptacle 102.

Subsequent movement of the receptacle 102 relative to the plant (not shown), to which the tomato 200 is attached, causes the peduncle 204 to separate and/or tear, thereby detaching the tomato 200 from the plant. The relative movement is preferably a rotational movement, whereby the tomato 200 undergoes a twisting motion that mimics manual detachment of the tomato 200 by hand. Additionally, and/or alternatively, once secured in the receptacle 102, the device 100 may be retracted from the plant to detach the tomato 200.

In another embodiment, the iris mechanism 122 may (further) provide a cutting function that severs the stalk or stem of the fruit or vegetable product 200 to detach it, for example if one or more of the moveable portions 124 of the iris mechanism 122 is provided with a cutting edge. Alternatively, or in addition, a separate cutting mechanism (e.g. "cutting means") (not shown) may be provided for severing the stalk or stem, such as a blade or shears, for example.

Turning again to Figure 1, the receptacle 102 is mounted to a support frame 112. The receptacle 102 is mounted to the support frame 112 via a support bracket 114 in the form of an annular ring. A plurality of bearings 116 (for example, three) are spaced around the support bracket 114 to facilitate rotation of the receptacle 102 relative to the support bracket 114. Furthermore, axial movement of the receptacle 102 may be limited relative to the support bracket 116, such that only relative rotation is permitted.

An electric motor 118 (e.g. "means for rotating") is mounted on the support bracket 114. The electric motor 118 is arranged to provide rotational drive to the receptacle 102 so as to cause it to rotate relative to the support bracket 114. The electric motor 118 is coupled to the receptacle 102 via a drive member 120, which is shown here as a drive belt The drive belt 120 directly engages the receptacle 102, and may therefore comprise rubber or another suitably elastic material that provides a friction engagement, for example. The drive belt 120 is rotatably driven by the electric motor 118, which in turn causes the receptacle 102 to rotate. In other words, the electric motor 118 applies a rotational force to the receptacle 102. The motor 118 may be controlled to drive rotation in either direction. The drive member 120 may alternatively comprise a strap or chain, or a gear and rack arrangement, for example.

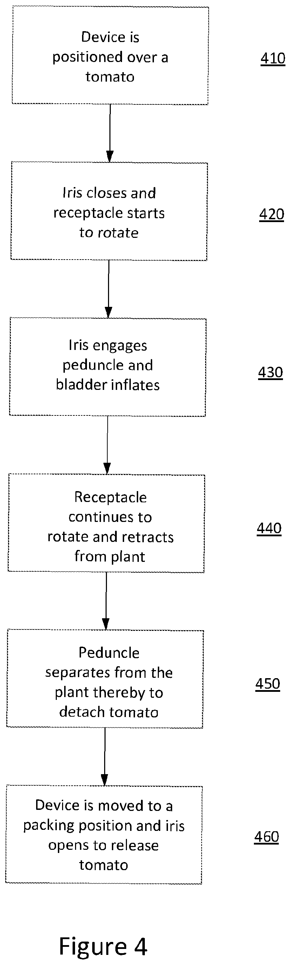

At least part of an exemplary mode of operation will now be described, with reference to a tomato being handled by the end effector device 100, and the steps illustrated in Figure 4, as follows:
- Step 410: The end effector device 100 is moved into position over a tomato 200 such that the body 202 of the tomato 200 is received into the receptacle 102.
- Step 420: The iris mechanism 122 starts to close around the peduncle 204 of the tomato 200 and the receptacle 102 is slowly rotated by the electric motor 118.
- Step 430: The iris mechanism 122 engages the peduncle 204 and the inflatable bladder 126 (disposed inside the receptacle 102) inflates around the body 202 of the tomato 200 to retain it.
- Step 440: The receptacle 102 continues to rotate, thereby rotating the tomato 200. As the receptacle 102 rotates, it retracts from the tomato plant.
- Step 450: The peduncle 204 separates from the tomato plant (or a stalk thereof).
- Step 460: The end effector device 100 moves to a packing position, at which point the inflatable bladder 126 deflates. The iris mechanism 122 then opens to release the tomato 200 into the packaging.

This is of course only an exemplary mode of operation, and other modes of operation may be possible within the scope of the invention.

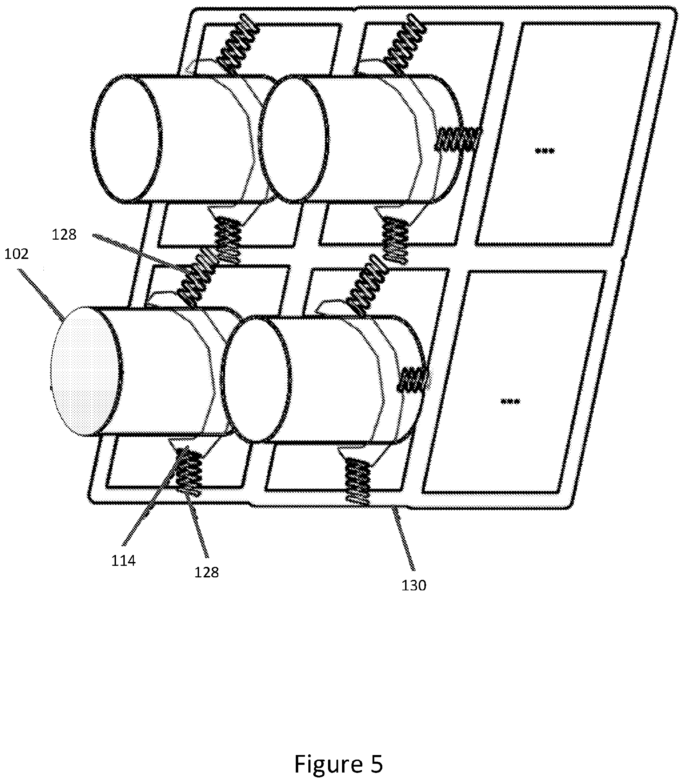

Figure 5 shows a support frame 130, in the form of an "x/y sprung bracket". Multiple receptacles 102 are independently supported in the support frame 130 by springs 128 (or similar resilient means), which allow the receptacles 102 a degree of movement, for example to absorb minor impacts. Preferably, each receptacle 102 is supported by two pairs of opposing springs 128 arranged to allow/control movement in both the x-axis and y-axis, relative to the bracket 130.

By supporting multiple receptacles 102 on a single bracket 130, multiple tomatoes (i.e. "products" / "objects") can therefore be picked simultaneously from a single tomato truss (not shown), for example, whilst allowing for organic variation in growth shape/sizes. The springs 128 may allow receptacles 102 to move forward and backward within the support frame 130. This may allow the support frame 130 to be advanced towards a tomato truss when one or more receptacle 102 already retains a tomato thereby to capture tomatoes that are deeper in the truss in empty receptacles 102 while allowing already filled receptacles 102 to lag behind, which may help to prevent damage to the tomatoes and/or plant from which they are grown. The support frame 130 may be attached to a single robot (arm). Multiple robot arms may each be attached to a support frame 130 for enhanced efficiency.

Possible alternatives & extensions may include any of the following:
The retaining means may be a gripper mechanism (e.g. similar to a robot "hand") arranged to grip (and thereby retain/receive) a product, or a first and/or second portion thereof. The retaining means and the engaging means may be provided by the same component, for example, such as the gripper mechanism. A means for sucking (e.g. a "suction device") may be arranged to suck a product into and/or to position it relative to the retaining and/or engaging means. The suction device may be arranged to create a partial vacuum to suck in the product. A second robot or fixed arm may be used to position the product into the retaining means.

One or more sensors may be arranged to detect whether a fruit/vegetable product is within, or is entering the receptacle, and its (e.g. relative) position. Sensors may be arranged to provide force-feedback to indicate how securely a product is retained and/or to indicate a collision. The receptacle may be directly mounted to a robot (arm) that can be continuously rotation in either/both directions instead of requiring a support bracket and/or ring. The end effector device may be adapted such that it is easily and/or automatically interchangeable with another end effector device, for example whereby it is provided with a quick release mechanism (not shown).

Multiple end effector devices could be attached to the same robot (arm) to allow multiple products to be handled (e.g. picked) simultaneously. The robot (arm) may be connected directly to the support frame. The device may be made from metal/plastic/other material in whole or part.

It will be understood that the present invention has been described above purely by way of example, and modifications of detail can be made within the scope of the invention as defined in the appended claims.

Furthermore, any feature in a particular aspect described herein may be applied to another aspect, in any appropriate combination. It should also be appreciated that particular combinations of the various features described and defined in any aspects described herein can be implemented and/or supplied and/or used independently in accordance with the appended claims.

## Claims

1. A device (100) for handling fresh fruit or vegetable products (20) attached to a plant, comprising:
means (102) for retaining at least a first portion (202) of a product (20); and
means (122) for engaging a peduncle (204) of the retained product (20); **characterized in that** the engaging means (122) is arranged to rotate the peduncle (204) of the retained product (20);
wherein the retaining means (102) and engaging means are arranged such that, while a product (20) is retained by the retaining means (102), the engaging means (122) can be rotated to detach the product (20).

2. The device (100) of Claim 1, wherein the retaining means (102) and the engaging means (122) are arranged to rotate together.

3. The device (100) of Claim 1 or 2, wherein the retaining means (102) is operable to rotate the first portion (202) thereby causing the peduncle (204) to be rotated when engaged by the engaging means (122).

4. The device (100) of any preceding claim, further comprising means (118) for rotating the retaining means (102), for example by applying a rotational force to the retaining means (102); preferably: wherein the rotating means (118) comprises a motor arranged to provide a rotational drive output and a drive member (120) arranged to be driven by the motor, more preferably: wherein the rotating means (118) is arranged to provide continuous rotation of the retaining means (102); and/or wherein the drive member (120) is arranged to engage an exterior portion of the retaining means (102) so as to provide direct rotational drive to the retaining means (102), for example wherein said drive member (120) is a belt, strap or chain; and/or wherein the rotating means (118) comprises a gear and rack arrangement; more preferably wherein the retaining means (102) is spring-loaded such that, following rotation of the retaining means (102) from a first position to a second position, the retaining means (102) is biased to return to the first position once the rotational force has been removed.

5. The device (100) of any of the preceding claims, wherein the engaging means (122) is arranged to inhibit movement of the peduncle (204) relative to the retained first portion (202) when engaged therewith, for example wherein the engaging means (122) is operable to clamp the peduncle (204); preferably wherein the engaging means (122) comprises an annular member arranged to provide an aperture through which at least part of the peduncle (204) can be received; more preferably: wherein the engaging means (122) is arranged to move the peduncle (204) to a position that is generally central of the aperture; and/or wherein the annular member is configured to have a variable diameter such that the aperture can be opened or closed about the peduncle (204); still more preferably wherein the annular member further comprises a plurality of cooperating portions (124-1) arranged to move relative to each other during rotation of the retaining means (102) so as to vary the diameter of the aperture; yet more preferably wherein the plurality of portions (124-1) are operable to close the aperture around the peduncle (204) such that the annular member engages the peduncle (204).

6. The device (100) of any of the preceding claims, wherein the engaging means (122) is operable to sever the peduncle (204); preferably wherein the device further comprises cutting means operable to sever the peduncle (204); more preferably wherein the cutting means comprises pneumatic or electric shears.

7. The device (100) of any of the preceding claims, further comprising means for securing said at least a portion of said retained product (20); wherein the securing means is arranged to secure at least said first portion (202) in a desired position and/or orientation relative to the retaining means (102).

8. The device (100) of Claim 7, wherein the retaining means (102) has an interior compartment arranged to receive at least the first portion (202) of the product (20) via an opening (106), and wherein the securing means is disposed within the retaining means (102); and/or wherein the retaining means (102) comprises a receptacle having an interior compartment arranged to receive the first portion (202) via an opening (106) in the receptacle; preferably: wherein the receptacle comprises a housing having an opening (106) through which the first portion (202) is received into the interior compartment of the housing, for example wherein the housing is in the form of a cylindrical housing or canister; and/or wherein the engaging means (122) is positioned at the opening (106) of the retaining means (102).

9. The device (100) of Claim 7 or 8, wherein the securing means comprises one or more members that can be pulled tight about the product (20) to secure it and loosened to release the product (20), preferably wherein the one or more members are flexible members.

10. The device (100) of any of Claims 7 to 9, wherein the securing means comprises an inflatable member (126), wherein the inflatable member (126) is arranged to inhibit movement of the first portion (202) when inflated; preferably: further comprising means (110) for connecting to an air supply for inflation of the inflatable member (126), wherein the connecting means (110) is arranged to provide a connection with the air supply that allows the retaining means (102) to be rotated relative to the air supply while maintaining an air seal, for example wherein the air supply comprises a hose (108) or a similar air conduit; and/or wherein the inflatable member (126) is arranged at least partially to surround at least the first portion (202) of the product (20) when inflated; more preferably wherein the bladder has a substantially U-shaped configuration when uninflated and a substantially C-shaped configuration when inflated.

11. The device (100) of any of the preceding claims, further comprising a sensor arranged to perform at least of one of the following: detect the presence of a product (20) within the retaining means (102) and/or entering the retaining means (102); and detect the orientation of a product (20) retained by the retaining means (102); preferably wherein the sensor includes a camera, for example an RGB camera.

12. The device (100) of any of the preceding claims, further comprising means for creating a partial vacuum for sucking a product (20) thereby to position it relative to the retaining and/or engaging means; preferably wherein the sucking means is arranged to suck the product (20) into the retaining means (102).

13. The device (100) of any of the preceding claims, wherein the retaining means (102) is mounted to a support arranged to be connected to a mechanical device, optionally wherein the support has either a single or multiple-point attachment formation for attachment to the mechanical device; and/or wherein the retaining means (102) is mounted to a support such that it can rotate relative to the support, preferably wherein the retaining means (102) is rotatably mounted on one or more support components that are arranged to allow the retaining means (102) to rotate relative to the support with minimal friction; more preferably wherein the support further comprises a quick-release mechanism configured to allow the device (100) to be attached to and detached from a mechanical device, for example such that the device (100) can be readily interchanged with a different device having a corresponding quick-release mechanism.

14. The device (100) of any preceding claim, wherein the product (20) is a tomato or a bell pepper.

15. A robot arm comprising a device (100) according to any of the proceeding claims; preferably further being arranged to connect to two or more devices (100) according to any of Claims 1 to 14.

## Patentansprüche

1. Eine Vorrichtung (100) zum Handhaben von frischen Obst- oder Gemüseprodukten (20), die an einer Pflanze angeschlossen sind, umfassend:
ein Mittel (102) zum Festhalten von mindestens einem ersten Teilstück (202) eines Produkts (20); und
ein Mittel (122) zum Ineingriffnehmen eines Stängels (204) des festgehaltenen Produkts (20);
**dadurch gekennzeichnet, dass** das Eingriffsmittel (122) angeordnet ist, um den Stängel (204) des festgehaltenen Produkts (20) zu drehen;
wobei das Festhaltemittel (102) und das Eingriffsmittel so angeordnet sind, dass, während ein Produkt (20) durch das Festhaltemittel (102) festgehalten wird, das Eingriffsmittel (122) gedreht werden kann, um das Produkt (20) zu lösen.

2. Die Vorrichtung (100) nach Anspruch 1, wobei das Festhaltemittel (102) und das Eingriffsmittel (122) angeordnet sind, um sich zusammen zu drehen.

3. Die Vorrichtung (100) nach Anspruch 1 oder 2, wobei das Festhaltemittel (102) betriebsfähig ist, um das erste Teilstück (202) zu drehen, wodurch veranlasst wird, dass der Stängel (204) gedreht wird, wenn er durch das Eingriffsmittel (122) in Eingriff genommen wird.

4. Die Vorrichtung (100) nach einem vorhergehenden Anspruch, ferner umfassend ein Mittel (118) zum Drehen des Festhaltemittels (102), zum Beispiel durch Anwenden einer Drehkraft auf das Festhaltemittel (102); bevorzugt: wobei das Drehmittel (118) Folgendes umfasst: einen Motor, der angeordnet ist, um eine Drehantriebsleistung bereitzustellen, und ein Antriebsglied (120), das angeordnet ist, um durch den Motor angetrieben zu werden, bevorzugter: wobei das Drehmittel (118) angeordnet ist, um eine kontinuierliche Drehung des Festhaltemittels (102) bereitzustellen; und/oder wobei das Antriebsglied (120) angeordnet ist, um ein äußeres Teilstück des Festhaltemittels (102) in Eingriff zu nehmen, um so einen direkten Drehantrieb für das Festhaltemittel (102) bereitzustellen, wobei zum Beispiel das genannte Antriebsglied (120) ein Band, ein Riemen oder eine Kette ist; und/oder wobei das Drehmittel (118) eine Ritzel- und Zahnstangenanordnung umfasst; bevorzugter wobei das Festhaltemittel (102) gefedert ist, sodass nach der Drehung des Festhaltemittels (102) von einer ersten Position zu einer zweiten Position, das Festhaltemittel (102) vorgespannt ist, um zur ersten Position zurückzukehren, nachdem die Drehkraft entfernt worden ist.

5. Die Vorrichtung (100) nach einem der vorhergehenden Ansprüche, wobei das Eingriffsmittel (122) angeordnet ist, um eine Bewegung des Stängels (204) relativ zum festgehaltenen ersten Teilstück (202) zu hemmen, wenn es mit diesen im Eingriff steht, wobei zum Beispiel das Eingriffsmittel (122) betriebsfähig ist, um den Stängel (204) festzuklemmen; bevorzugt wobei das Eingriffsmittel (122) ein ringförmiges Glied umfasst, das angeordnet ist, um einen Durchlass bereitzustellen, durch den mindestens ein Teil des Stängels (204) aufgenommen werden kann; bevorzugter: wobei das Eingriffsmittel (122) angeordnet ist, um den Stängel (204) in eine Position zu bewegen, die generell mittig von dem Durchlass ist; und/oder wobei das ringförmige Glied konfiguriert ist, um einen variablen Durchmesser aufzuweisen, sodass der Durchlass um den Stängel (204) geöffnet oder geschlossen werden kann; noch bevorzugter wobei das ringförmige Glied ferner eine Vielzahl von zusammenwirkenden Teilstücken (124-1) umfasst, die angeordnet sind, um sich während der Drehung des Festhaltemittels (102) relativ zueinander zu drehen, um den Durchmesser des Durchlasses zu variieren; weiter bevorzugter wobei die Vielzahl von Teilstücken (124-1) betriebsfähig sind, um den Durchlass um den Stängel (204) herum zu schließen, sodass das ringförmige Glied den Stängel (204) in Eingriff nimmt.

6. Die Vorrichtung (100) nach einem der vorhergehenden Ansprüche, wobei das Eingriffsmittel (122) betriebsfähig ist, um den Stängel (204) abzutrennen; bevorzugt wobei die Vorrichtung ferner ein Schneidmittel umfasst, das betriebsfähig ist, um den Stängel (204) abzutrennen; bevorzugter wobei das Schneidmittel pneumatische oder elektrische Scheren umfasst.

7. Die Vorrichtung (100) nach einem der vorhergehenden Ansprüche, ferner umfassend ein Mittel zum Sichern des genannten mindestens einen Teilstücks des genannten festgehaltenen Produkts (20); wobei das Sicherungsmittel angeordnet ist, um mindestens das genannte Teilstück (202) in einer gewünschten Position und/oder Ausrichtung relativ zum Festhaltemittel (102) zu sichern.

8. Die Vorrichtung (100) nach Anspruch 7, wobei das Festhaltemittel (102) eine innere Kammer aufweist, die angeordnet ist, um mindestens das erste Teilstück (202) des Produkts (20) über eine Öffnung (106) aufzunehmen, und wobei das Sicherungsmittel innerhalb des Festhaltemittels (102) liegt; und/oder wobei das Festhaltemittel (102) eine Aufnahme umfasst, die eine innere Kammer aufweist, die angeordnet ist, um das erste Teilstück (202) über eine Öffnung (106) in der Aufnahme aufzunehmen; bevorzugt: wobei die Aufnahme ein Gehäuse umfasst, das eine Öffnung (106) aufweist, durch die das erste Teilstück (202) in die innere Kammer des Gehäuses aufgenommen wird, wobei zum Beispiel das Gehäuse in Form eines zylindrischen Gehäuses oder Kanisters vorliegt; und/oder wobei das Eingriffsmittel (122) an der Öffnung (106) des Festhaltemittels (102) positioniert ist.

9. Die Vorrichtung (100) nach Anspruch 7 oder 8, wobei das Sicherungsmittel ein oder mehrere Glieder umfasst, die um das Produkt (20) zusammengezogen werden können, um es zu sichern, und gelockert werden können, um das Produkt (20) freizugeben, bevorzugt wobei das eine oder die mehreren Glieder flexible Glieder sind.

10. Die Vorrichtung (100) nach einem der Ansprüche 7 bis 9, wobei das Sicherungsmittel ein aufblasbares Glied (126) umfasst, wobei das aufblasbare Glied (126) angeordnet ist, um eine Bewegung des ersten Teilstücks (202) zu hemmen, wenn es aufgeblasen ist; bevorzugt: ferner umfassend ein Mittel (110) zum Verbinden mit einer Luftversorgung zur Aufblasung des aufblasbaren Glieds (126), wobei das Verbindungsmittel (110) angeordnet ist, um eine Verbindung mit der Luftversorgung bereitzustellen, die dem Festhaltemittel (102) erlaubt, relativ zur Luftversorgung gedreht zu werden, während eine Luftdichtung aufrechterhalten wird, wobei zum Beispiel die Luftversorgung einen Schlauch (108) oder eine ähnliche Luftleitung umfasst; und/oder wobei das aufblasbare Glied (126) mindestens teilweise angeordnet ist, um mindestens das erste Teilstück (202) des Produkts (20) zu umgeben, wenn es aufgeblasen ist; bevorzugter wobei der Balg eine im Wesentlichen U-förmige Konfiguration aufweist, wenn er nicht aufgeblasen ist, und eine im Wesentlichen C-förmige Konfiguration aufweist, wenn er aufgeblasen ist.

11. Die Vorrichtung (100) nach einem der vorhergehenden Ansprüche, ferner umfassend einen Sensor, der angeordnet ist, um mindestens eines von Folgendem durchzuführen: Detektieren der Präsenz eines Produkts (20) innerhalb des Festhaltemittels (102) und/oder des Eintretens in das Festhaltemittel (102); und Detektieren der Ausrichtung eines Produkts (20), das durch das Festhaltemittel (102) festgehalten wird; bevorzugt wobei der Sensor eine Kamera, zum Beispiel eine RGB-Kamera, beinhaltet.

12. Die Vorrichtung (100) nach einem der vorhergehenden Ansprüche, ferner umfassend ein Mittel zum Herstellen eines teilweisen Vakuums zum Saugen eines Produkts (20), wodurch es relativ zum Festhaltemittel und/oder Eingriffsmittel positioniert wird; bevorzugt wobei das Saugmittel angeordnet ist, um das Produkt (20) in das Festhaltemittel (102) zu saugen.

13. Die Vorrichtung (100) nach einem der vorhergehenden Ansprüche, wobei das Festhaltemittel (102) an einer Stütze montiert ist, die angeordnet ist, um mit einer mechanischen Vorrichtung verbunden zu werden, optional wobei die Stütze entweder eine Einzel- oder Mehrpunk-Anschlussformation für den Anschluss an die mechanische Vorrichtung aufweist; und/oder wobei das Festhaltemittel (102) an einer Stütze so montiert ist, dass sie relativ zur Stütze gedreht werden kann, bevorzugt wobei das Festhaltemittel (102) auf einer oder mehreren Stützkomponenten drehbar montiert ist, die angeordnet sind, um dem Festhaltemittel (102) zu erlauben, sich relativ zur Stütze mit minimaler Reibung zu drehen; bevorzugter wobei die Stütze ferner einen Schnellverschlussmechanismus umfasst, der konfiguriert ist, um der Vorrichtung (100) zu erlauben, an einer mechanischen Vorrichtung angeschlossen und von dieser gelöst zu werden, zum Beispiel so, dass die Vorrichtung (100) leicht mit einer anderen Vorrichtung ausgewechselt werden kann, die einen entsprechenden Schnellverschlussmechanismus aufweist.

14. Die Vorrichtung (100) nach einem vorhergehenden Anspruch, wobei das Produkt (20) eine Tomate oder eine Paprikaschote ist.

15. Ein Roboterarm, der eine Vorrichtung (100) gemäß einem der vorhergehenden Ansprüche umfasst;
bevorzugt ferner angeordnet, um zwei oder mehrere Vorrichtungen (100) gemäß einem der Ansprüche 1 bis 14 zu verbinden.

## Revendications

1. Dispositif (100) pour manipuler des produits de légumes ou de fruits frais (20) attachés à une plante, comprenant :
un moyen (102) pour retenir au moins une première portion (202) d'un produit (20) ; et
un moyen (122) pour se mettre en prise avec un pédoncule (204) du produit retenu (20) ;
**caractérisé en ce que** le moyen de mise en prise (122) est agencé pour faire tourner le pédoncule (204) du produit retenu (20) ;
dans lequel le moyen de retenue (102) et le moyen de mise en prise sont agencés de telle sorte que, pendant qu'un produit (20) est retenu par le moyen de retenue (102), le moyen de mise en prise (122) peut être tourné afin de détacher le produit (20).

2. Dispositif (100) de la revendication 1, dans lequel le moyen de retenue (102) et le moyen de mise en prise (122) sont agencés pour tourner ensemble.

3. Dispositif (100) de la revendication 1 ou 2, dans lequel le moyen de retenue (102) est apte à fonctionner pour faire tourner la première portion (202), ce qui amène le pédoncule (204) à être tourné lorsqu'il est mis en prise par le moyen de mise en prise (122).

4. Dispositif (100) de n'importe quelle revendication précédente, comprenant en outre un moyen (118) pour faire tourner le moyen de retenue (102), par exemple en appliquant une force de rotation au moyen de retenue (102) ; de préférence : dans lequel le moyen de rotation (118) comprend un moteur agencé pour fournir une sortie d'entraînement de rotation et un élément d'entraînement (120) agencé pour être entraîné par le moteur, de plus grande préférence : dans lequel le moyen de rotation (118) est agencé pour fournir une rotation continue du moyen de retenue (102) ; et/ou dans lequel l'élément d'entraînement (120) est agencé pour se mettre en prise avec une portion extérieure du moyen de retenue (102) de sorte à fournir un entraînement de rotation direct au moyen de retenue (102), par exemple dans lequel ledit élément d'entraînement (120) est une courroie, une sangle ou une chaîne ; et/ou dans lequel le moyen de rotation (118) comprend un agencement à pignon et cliquet ; de plus grande préférence dans lequel le moyen de retenue (102) est chargé par ressort de telle sorte que, à la suite d'une rotation du moyen de retenue (102) à partir d'une première position jusqu'à une deuxième position, le moyen de retenue (102) soit sollicité pour revenir à la première position une fois que la force de rotation a été enlevée.

5. Dispositif (100) de n'importe lesquelles des revendications précédentes, dans lequel le moyen de mise en prise (122) est agencé pour interdire un mouvement du pédoncule (204) relativement à la première portion retenue (202) lorsqu'il est en prise avec celui-ci, par exemple dans lequel le moyen de mise en prise (122) est apte à fonctionner pour serrer le pédoncule (204) ; de préférence dans lequel le moyen de mise en prise (122) comprend un élément annulaire agencé pour fournir une ouverture à travers laquelle au moins une partie du pédoncule (204) peut être reçue ; de plus grande préférence : dans lequel le moyen de mise en prise (122) est agencé pour déplacer le pédoncule (204) jusqu'à une position qui est centrale de manière générale par rapport à l'ouverture ; et/ou dans lequel l'élément annulaire est configuré pour avoir un diamètre variable de telle sorte que l'ouverture puisse être ouverte ou fermée autour du pédoncule (204) ; encore de plus grande préférence dans lequel l'élément annulaire comprend en outre une pluralité de portions coopérantes (124-1) agencées pour bouger l'une relativement à l'autre durant une rotation du moyen de retenue (102) de sorte à faire varier le diamètre de l'ouverture ; de plus grande préférence encore dans lequel la pluralité de portions (124-1) sont aptes à fonctionner pour fermer l'ouverture autour du pédoncule (204) de telle sorte que l'élément annulaire se mette en prise avec le pédoncule (204).

6. Dispositif (100) de n'importe lesquelles des revendications précédentes, dans lequel le moyen de mise en prise (122) est apte à fonctionner pour sectionner le pédoncule (204) ; de préférence dans lequel le dispositif comprend en outre un moyen de coupe apte à fonctionner pour sectionner le pédoncule (204) ; de plus grande préférence dans lequel le moyen de coupe comprend des cisailles pneumatiques ou électriques.

7. Dispositif (100) de n'importe lesquelles des revendications précédentes, comprenant en outre un moyen pour immobiliser ladite au moins une portion dudit produit retenu (20) ; dans lequel le moyen d'immobilisation est agencé pour immobiliser au moins ladite première portion (202) dans une position et/ou orientation désirée relativement au moyen de retenue (102).

8. Dispositif (100) de la revendication 7, dans lequel le moyen de retenue (102) possède un compartiment intérieur agencé pour recevoir au moins la première portion (202) du produit (20) par l'intermédiaire d'une ouverture (106), et dans lequel le moyen d'immobilisation est disposé au sein du moyen de retenue (102) ; et/ou dans lequel the moyen de retenue (102) comprend un réceptacle ayant un compartiment intérieur qui est agencé pour recevoir la première portion (202) par l'intermédiaire d'une ouverture (106) dans le réceptacle ; de préférence : dans lequel le réceptacle comprend un logement avec une ouverture (106) à travers laquelle la première portion (202) est reçue dans le compartiment intérieur du logement, par exemple dans lequel le logement se présente sous la forme d'un logement cylindrique ou d'une cartouche ; et/ou dans lequel le moyen de mise en prise (122) est positionné au niveau de l'ouverture (106) du moyen de retenue (102).

9. Dispositif (100) de la revendication 7 ou 8, dans lequel le moyen d'immobilisation comprend un ou plusieurs éléments qui peuvent être tirés étroitement autour du produit (20) afin de l'immobiliser et peuvent être relâchés pour libérer le produit (20), de préférence dans lequel les un ou plusieurs éléments sont des éléments souples.

10. Dispositif (100) de n'importe lesquelles des revendications 7 à 9, dans lequel le moyen d'immobilisation comprend un élément gonflable (126), l'élément gonflable (126) étant agencé pour interdire un mouvement de la première portion (202) lorsqu'il est gonflé ; de préférence : comprenant en outre un moyen (110) pour un raccordement à une alimentation en air pour le gonflage de l'élément gonflable (126), dans lequel le moyen de raccordement (110) est agencé pour fournir un raccordement à l'alimentation en air qui permet au moyen de retenue (102) d'être tourné relativement à l'alimentation en air tout en maintenant une étanchéité à l'air, par exemple dans lequel l'alimentation en air comprend un tuyau (108) ou un conduit d'air similaire ; et/ou dans lequel l'élément gonflable (126) est agencé au moins partiellement pour entourer au moins la première portion (202) du produit (20) lorsqu'il est gonflé ; de plus grande préférence dans lequel la vessie a une configuration substantiellement en forme d'U lorsqu'elle n'est pas gonflée et une configuration substantiellement en forme de C lorsqu'elle est gonflée.

11. Dispositif (100) de n'importe lesquelles des revendications précédentes, comprenant en outre un capteur agencé pour réaliser au moins une opération parmi les suivantes : détecter la présence d'un produit (20) au sein du moyen de retenue (102) et/ou entrant dans le moyen de retenue (102) ; et détecter l'orientation d'un produit (20) retenu par le moyen de retenue (102) ; de préférence dans lequel le capteur inclut une caméra, par exemple une caméra RGB.

12. Dispositif (100) de n'importe lesquelles des revendications précédentes, comprenant en outre un moyen pour créer un vide partiel pour aspirer un produit (20) ce qui permet ainsi de le positionner relativement au moyen de retenue et/ou au moyen de mise en prise ; de préférence dans lequel le moyen d'aspiration est agencé pour aspirer le produit (20) jusque dans le moyen de retenue (102).

13. Dispositif (100) de n'importe lesquelles des revendications précédentes, dans lequel le moyen de retenue (102) est monté sur un support agencé pour être raccordé à un dispositif mécanique, facultativement dans lequel le support a, soit une formation d'attache unique, soit une formation d'attache à points multiples pour être attaché au dispositif mécanique ; et/ou dans lequel le moyen de retenue (102) est monté sur un support de telle sorte qu'il puisse tourner relativement au support, de préférence dans lequel le moyen de retenue (102) est monté de manière rotative sur un ou plusieurs composants de support qui sont agencés pour permettre au moyen de retenue (102) de tourner relativement au support avec une friction minimale ; de plus grande préférence dans lequel le support comprend en outre un mécanisme à libération rapide configuré pour permettre au dispositif (100) d'être attaché à, et détaché d'un dispositif mécanique, par exemple de telle sorte que le dispositif (100) puisse être facilement interchangé avec un dispositif différent ayant un mécanisme de libération rapide correspondant.

14. Dispositif (100) de n'importe quelle revendication précédente, dans lequel le produit (20) est une tomate ou un poivron.

15. Bras robotique comprenant un dispositif (100) selon n'importe lesquelles des revendications précédentes ; de préférence agencé en outre pour être raccordé à deux ou plusieurs dispositifs (100) selon n'importe lesquelles des revendications 1 à 14.
